# EUROPEAN PATENT SPECIFICATION

(11) **EP 3 312 647 B1**
(45) Date of publication and mention of the grant of the patent: **03.02.2021**
(21) Application number: 15898038.3
(22) Date of filing: 16.07.2015
(51) Int. Cl.: G02B 6/126, G02B 6/14, H04J 14/04

(54) **POLARIZATION MODE CONVERTER**
POLARISATIONSMODENWANDLER
CONVERTISSEUR DE MODE DE POLARISATION

(43) Date of publication of application: 25.04.2018
(73) Proprietor: Huawei Technologies Co., Ltd., Longgang District Shenzhen, Guangdong 518129 (CN)
(72) Inventor: TU, Xin, Shenzhen Guangdong 518129 (CN)
(74) Representative: Thun, Clemens
(86) International application number: PCT/CN2015/084265
(87) International publication number: WO 2017/008311

(56) References cited:
- EP-A1- 3 009 869
- WO-A1-2014/207949
- WO-A1-2015/096070
- CN-A- 1 708 718
- CN-A- 101 320 113
- CN-A- 104 252 020
- CN-U- 204 302 526
- US-A1- 2006 018 584
- US-A1- 2008 025 665
- US-A1- 2013 343 695
- US-A1- 2015 003 782
- US-B1- 8 855 449

## Description

### TECHNICAL FIELD

Embodiments of the present invention relate to the field of optoelectronic products, and in particular, to a polarization mode converter.

### BACKGROUND

As transmission capacities and speeds of trunk lines in a telecommunications network are increasing, fiber-optic communication has become a main transmission means on a modern information network. A photonic integrated circuit (PIC) chip is a core constituent part of an optical communications module and component. When the chip is connected to an optical fiber, polarization states of optical signals entering the PIC chip from the optical fiber are uncertain because a section of the optical fiber is not strictly circular and other factors such as stress are exerted. When these optical signals in the uncertain polarization state pass through the PIC chip directly, effective refractive indices are different in a transverse electric wave (TE) mode and a transverse magnetic wave (TM) mode in the PIC chip because of restrictions such as a birefringent effect or a waveguide size. Consequently, most components are sensitive to polarization, a polarization dependent loss (PDL) and polarization mode dispersion (PMD) are generated, and further a signal-to-noise ratio of a system is reduced. Currently, to ensure signal transmission quality and eliminate a polarization effect, a PIC chip needs to separately process optical signals in different polarization states. In this case, a polarization mode converter is an indispensable constituent element of a PIC chip.

In the prior art, a polarization mode is converted by using two adjacent waveguides of a same height, and widths of the two adjacent waveguides remain unchanged in an optical signal transmission direction. The polarization mode converter has a small process tolerance and a high defect rate.

WO 2014/207949 discloses a polarization conversion element, wherein an optical waveguide formed on a substrate sequentially includes a first waveguide portion, a polarization rotation portion, and a second waveguide portion, an effective refractive index of a TE mode having the highest effective refractive index in an eigen mode of waveguide light on a sectional surface of the first waveguide portion is higher than an effective refractive index of a TM mode having the highest effective refractive index, an effective refractive index of the TM mode having the highest effective refractive index on a sectional surface of the second waveguide portion is higher than an effective refractive index of the TE mode having the highest effective refractive index.

CN 101 320 113 discloses a waveguide type polarized mode converter, which is composed of a conventional dielectric waveguide which contains a substrate layer, a covering layer and a core layer; wherein, the core layer is formed by that the head and the tail of an L-shaped conversion waveguide are respectively connected with a rectangular input waveguide and a rectangular output waveguide which has a different dimension with the input waveguide, and also can be formed by that the head and the tail of the L-shaped conversion waveguide are respectively connected with a rectangular input waveguide and a rectangular output waveguide which has the same dimension as the input waveguide through a conical transition waveguide.

CN 1 708 718 discloses an integrated optic polarization converter including a plurality of core layers used to approximate a gradually twisted waveguide and therein adiabatically transform a propagating mode from an initial polarization state to a different final polarization state.

CN 204 302 526 discloses a polarization splitting rotator. The polarization splitting rotator at least comprises waveguides which are formed in the top-layer silicon of a SOI material, and at least comprise a single mode input waveguide, a double etching waveguide and an asymmetric Y-branch waveguide which are connected orderly, wherein the double etching waveguide comprises a first etching area of which one end is connected with the tail end of the single mode input waveguide, and a second etching area which is located at the two sides of the first etching area, and the height of the first etching area is greater than the height of the second etching area; the asymmetric Y-branch waveguide comprises a root waveguide, a first branch waveguide and a second branch waveguide, the root waveguide is connected with the tail end of the first etching area, and the width of a first Y-branch waveguide is greater than the width of a second Y-branch waveguide.

CN 104 252 020 discloses a polarization conversion device, wherein the device includes: a directional coupler that includes an input side optical waveguide and an output side optical waveguide which are disposed in parallel to each other and each of which has a core. Assuming that a direction in which the input side optical waveguide and the output side optical waveguide face each other is a width direction and a direction perpendicular to the width direction is a height direction in a cross section perpendicular to a longitudinal direction of each of the input side optical waveguide and the output side optical waveguide, and the directional coupler is configured to couple first light guided through the input side optical waveguide to second light guided through the output side optical waveguide, the polarization direction of the second light is perpendicular to that of the first light.

### SUMMARY

Embodiments of the present invention provide a polarization mode converter, so as to resolve problems of a small process tolerance and a high defect rate of a prior-art polarization mode converter.

The present invention is defined in the appended independent claim 1. Further implementations are disclosed in the appended dependent claims.

In a first possible implementation of the invention, the first tapered waveguide is a triangular waveguide, and a side of the triangular waveguide is connected to a side of the rectangular waveguide.

With reference to the first possible implementation of the invention, in a second possible implementation of the invention, the second tapered waveguide is a trapezoid waveguide, and a lateral side of the trapezoid waveguide is parallel to a side of the triangular waveguide.

In a third possible implementation of the invention, a ratio of the second height to the first height is greater than 0.1.

In a fourth possible implementation of the invention, a ratio of the second height to the first height is less than 0.9.

With reference to the second possible implementation of the invention, in a fifth possible implementation of the invention, a distance between the second tapered waveguide and the first tapered waveguide is less than 1 micrometer.

In a sixth possible implementation of the invention, further including: an arc-shaped waveguide, where an end of the arc-shaped waveguide is connected to the first end of the second tapered waveguide.

In a seventh possible implementation of the invention, wherein a first end of the rectangular waveguide is configured to receive a first TE signal, a second end of the rectangular waveguide is configured to output the first TE signal.

In an eighth possible implementation of the invention, wherein the first end of the rectangular waveguide is configured to receive a second TM signal, where the second TM signal, when being transmitted in the rectangular waveguide, is gradually coupled into the first tapered waveguide and then gradually coupled into the second tapered waveguide to obtain a second TE signal; the second end of the second tapered waveguide is configured to output the second TE signal.

In a ninth possible implementation of the invention, wherein a second end of the rectangular waveguide is configured to receive a third TE signal, a first end of the rectangular waveguide is configured to output the third TE signal.

In a tenth possible implementation of the invention, wherein the second end of the second tapered waveguide is configured to input a fourth TE signal, where the fourth TE signal, when being transmitted in the second tapered waveguide, is gradually coupled into the first tapered waveguide and then gradually coupled into the rectangular waveguide to obtain a fourth TM signal; the first end of the rectangular waveguide is configured to output the fourth TM signal.

The polarization mode converter provided in the embodiments of the present invention may not only be used as a polarization rotary beam splitter, but also be used as a polarization rotary beam combiner. A waveguide structure with a width changing gradually in an optical signal transmission direction is used for a first tapered waveguide and a second tapered waveguide, so that section widths of waveguides in the optical signal transmission direction are different at different locations. In this way, coupling conditions of different wavelengths can be met, and an operating bandwidth is extended. In addition, a waveguide width is a varying interval, not a fixed value. Even if a process error results in a waveguide width deviation, an optimum coupling condition can still be met in a large range, so as to resolve problems of a low process tolerance, a complex structure, and a small operating bandwidth of a prior-art waveguide polarization converter, and to implement a component with a high process tolerance, a simple structure, and a large operating bandwidth.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a structural diagram of a polarization mode converter according to an embodiment of the present invention;
FIG. 2 is a structural diagram of another polarization mode converter according to an embodiment of the present invention;
FIG. 3 is a structural diagram of still another polarization mode converter according to an embodiment of the present invention;
FIG. 4 is a structural diagram of still another polarization mode converter according to an embodiment of the present invention;
FIG. 5 is a solid figure of a polarization mode converter according to an embodiment of the present invention;
FIG. 6 is a top view of a polarization mode converter according to an embodiment of the present invention;
FIG. 7 is a side view of a polarization mode converter according to an embodiment of the present invention;
FIG. 8 is an energy distribution diagram of a polarization mode converter according to an embodiment of the present invention;
FIG. 9 is an energy distribution diagram of another polarization mode converter according to an embodiment of the present invention;
FIG. 10 is a diagram of energy loss of a polarization mode converter according to an embodiment of the present invention; and

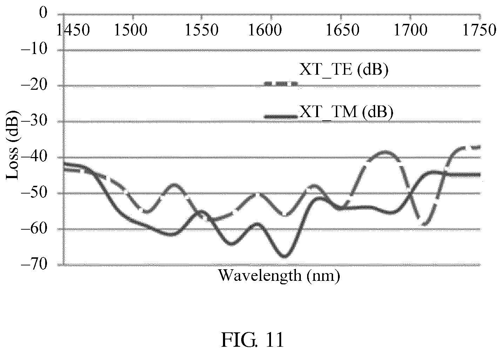

FIG. 11 is a diagram of energy crosstalk of a polarization mode converter according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

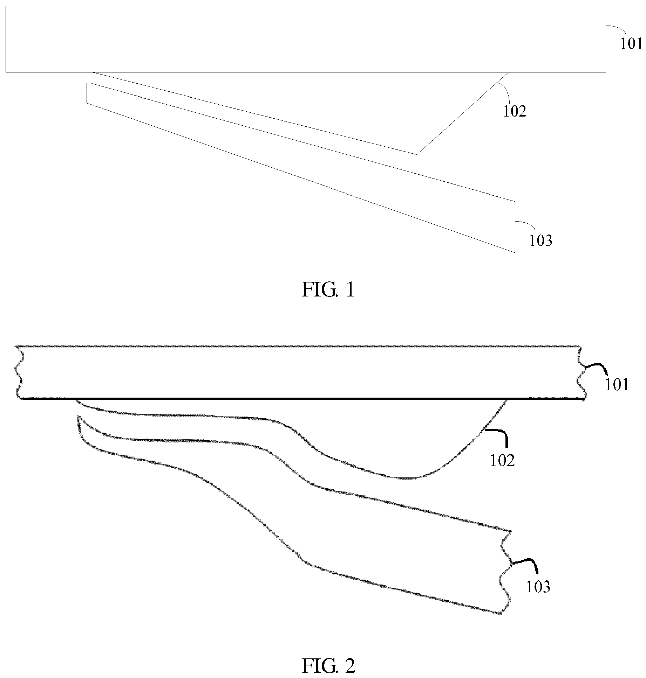

Referring to FIG. 1, FIG. 1 is a polarization mode converter according to an embodiment of the present invention, including:
a rectangular waveguide 101, where a height of the rectangular waveguide is a first height; and
the height of the rectangular waveguide 101 in FIG. 1 is a first height HI;
a first tapered waveguide 102, where a side of the first tapered waveguide is connected to the rectangular waveguide, a width of the first tapered waveguide changes gradually, a height of the first tapered waveguide is a second height, and the second height is less than the first height; and
the height of the first tapered waveguide 102 in FIG. 1 is a second height H2, where H2 < HI; and
a second tapered waveguide 103, where the second tapered waveguide is unconnected to the rectangular waveguide, the second tapered waveguide is unconnected to the first tapered waveguide, a width of the second tapered waveguide changes gradually, a height of the second tapered waveguide is a first height HI, a distance between a first end of the second tapered waveguide and the rectangular waveguide is a first distance, a distance between a second end of the second tapered waveguide and the rectangular waveguide is a second distance, the second distance is greater than the first distance, and the first tapered waveguide is located between the rectangular waveguide and the second tapered waveguide; and
the height of the second tapered waveguide 103 in FIG. 1 is the first height H1.

Optionally, waveguide materials of the rectangular waveguide 101, the first tapered waveguide 102, and the second tapered waveguide 103 in FIG. 1 may be silicon, and materials of covering layers of the rectangular waveguide 101, the first tapered waveguide 102, and the second tapered waveguide 103 may be silica.

Optionally, the first tapered waveguide 102 may be a triangular waveguide shown in FIG. 1, and a side of the triangular waveguide is in contact with and connected to a side of the rectangular waveguide.

Optionally, the second tapered waveguide 103 may be a trapezoid waveguide shown in FIG. 1, a lateral side of the trapezoid waveguide is parallel to a side of the triangular waveguide, and a distance between the trapezoid waveguide and the triangular waveguide remains unchanged.

Optionally, the first tapered waveguide 102 may be a waveguide with an arc-shaped profile shown in FIG. 2, a height of the first tapered waveguide 102 is H2, and H2 < HI, where a side of the waveguide with the arc-shaped profile is in contact with a side of the rectangular waveguide. Certainly, the first tapered waveguide 102 may alternatively have a polygonal profile in another embodiment.

Optionally, the second tapered waveguide 103 may be a waveguide with an arc-shaped profile shown in FIG. 2. Because a waveguide with an arc-shaped or a polygonal profile can better meet light field coupling distribution, coupling efficiency is improved. In this case, a length of a component can be reduced.

Optionally, a ratio of the second height H2 to the first height HI, namely H2/H1, is greater than 0.1.

Optionally, a ratio of the second height H2 to the first height HI, namely H2/H1, is less than 0.9.

Optionally, a distance between the second tapered waveguide and the first tapered waveguide is less than 1 micrometer.

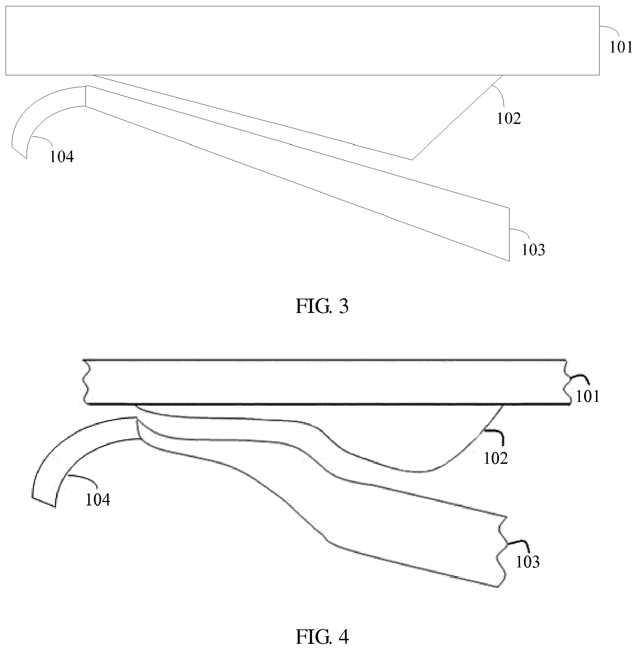

Optionally, as shown in FIG. 3 and FIG. 4, the polarization mode converter may further include:
an arc-shaped waveguide 104, where an end of the arc-shaped waveguide is connected to the first end of the second tapered waveguide. As shown in FIG. 3 and FIG. 4, the arc-shaped waveguide is located on the left of the second tapered waveguide, and when an optical signal is input from a left end of the rectangular waveguide, after the arc-shaped waveguide is added, a waveguide refractive index during coupling changes gradually, instead of changing suddenly as before, so as to reduce a loss caused by a mode field mismatch. In this case, an insertion loss during TE light input and a conversion loss during TM light input can be reduced.

Optionally, a first end of the rectangular waveguide is configured to receive a first TE signal, a second end of the rectangular waveguide is configured to output the first TE signal, the first end of the rectangular waveguide is close to the first end of the second tapered waveguide, and the second end of the rectangular waveguide is close to the second end of the second tapered waveguide.

In FIG. 1, the first end of the rectangular waveguide is a left end of the rectangular waveguide, the second end of the rectangular waveguide is a right end of the rectangular waveguide, the first end of the second tapered waveguide is a left end of the second tapered waveguide, and the second end of the second tapered waveguide is a right end of the second tapered waveguide. A first TE signal TE-X is input from the left end of the rectangular waveguide, and is output from the right end of the rectangular waveguide.

Optionally, the first end of the rectangular waveguide is configured to receive a second TM signal, where the second TM signal, when being transmitted in the rectangular waveguide, is gradually coupled into the first tapered waveguide and then gradually coupled into the second tapered waveguide to obtain a second TE signal; the second end of the second tapered waveguide is configured to output the second TE signal; the first end of the rectangular waveguide is close to the first end of the second tapered waveguide; and the second end of the rectangular waveguide is close to the second end of the second tapered waveguide.

In FIG. 1, the first end of the rectangular waveguide is the left end of the rectangular waveguide, the second end of the rectangular waveguide is the right end of the rectangular waveguide, the first end of the second tapered waveguide is the left end of the second tapered waveguide, and the second end of the second tapered waveguide is the right end of the second tapered waveguide. A second TM signal TM-Y is input from the left end of the rectangular waveguide, TM-Y, when being transmitted in the rectangular waveguide, is gradually coupled into the first tapered waveguide and then gradually coupled into the second tapered waveguide to obtain a second TE signal TE-Y, and TE-Y is output from the right end of the second tapered waveguide. When the second TM signal TM-Y being transmitted in the rectangular waveguide is gradually coupled into the first tapered waveguide, a part of TM-Y in the first tapered waveguide has been converted into a TE signal and then gradually coupled into the second tapered waveguide to obtain the second TE signal TE-Y. In this case, the majority of the TM-Y signal has been converted into the TE signal. A similar conversion process is involved in the following embodiments.

When the polarization mode converter in FIG. 1 is used as a polarization beam splitter, signals TE-X and TM-Y are input from the left end of the rectangular waveguide. The TE-X signal is output from the right end of the rectangular waveguide while the TM-Y signal is converted into TE-Y by passing through the rectangular waveguide, the first tapered waveguide, and the second tapered waveguide, and then TE-Y is output from the right end of the second tapered waveguide, so as to implement beam splitting.

Optionally, the second end of the rectangular waveguide is configured to receive a third TE signal, the first end of the rectangular waveguide is configured to output the third TE signal, the first end of the rectangular waveguide is close to the first end of the second tapered waveguide, and the second end of the rectangular waveguide is close to the second end of the second tapered waveguide.

In FIG. 1, the first end of the rectangular waveguide is the left end of the rectangular waveguide, the second end of the rectangular waveguide is the right end of the rectangular waveguide, the first end of the second tapered waveguide is the left end of the second tapered waveguide, and the second end of the second tapered waveguide is the right end of the second tapered waveguide. A third TE signal TE-M is input from the right end of the rectangular waveguide, and is output from the left end of the rectangular waveguide.

Optionally, the second end of the second tapered waveguide is configured to input a fourth TE signal, where the fourth TE signal, when being transmitted in the second tapered waveguide, is gradually coupled into the first tapered waveguide and then gradually coupled into the rectangular waveguide to obtain a fourth TM signal; the first end of the rectangular waveguide is configured to output the fourth TM signal; the first end of the rectangular waveguide is close to the first end of the second tapered waveguide; and the second end of the rectangular waveguide is close to the second end of the second tapered waveguide.

In FIG. 1, the first end of the rectangular waveguide is the left end of the rectangular waveguide, the second end of the rectangular waveguide is the right end of the rectangular waveguide, the first end of the second tapered waveguide is the left end of the second tapered waveguide, and the second end of the second tapered waveguide is the right end of the second tapered waveguide. A fourth TE signal TE-N is input from the right end of the second tapered waveguide, TE-N, when being transmitted in the second tapered waveguide, is gradually coupled into the first tapered waveguide and then gradually coupled into the rectangular waveguide to obtain a fourth TM signal TM-N, and TM-N is output from the left end of the rectangular waveguide.

When the polarization mode converter in FIG. 1 is used as a polarization beam combiner, a signal TE-M is input from the right end of the rectangular waveguide, a signal TE-N is input from the right end of the second tapered waveguide. The signal TE-M is output from the left end of the rectangular waveguide while the signal TE-N is converted into TM-N by passing through the second tapered waveguide, the first tapered waveguide, and the rectangular waveguide, and then TM-N is output from the left end of the rectangular waveguide, so as to implement beam combining.

A prior-art polarization mode converter, such as a polarization rotary beam splitter or a polarization rotary beam combiner, changes a polarization mode by using two adjacent waveguides with a same height, and widths of the two adjacent waveguides remain unchanged by using fixed values in an optical signal transmission direction. According to a coupling mode principle of a coupler, a waveguide structure with a fixed width has a corresponding unique optimum operating wavelength. Once an error occurs during processing, the optimum operating wavelength is seriously deviated. Therefore, the operating bandwidth of this type of structure is limited by a waveguide size. In addition, efficiency in coupling and converting an optical signal from a waveguide into another waveguide is very sensitive to a waveguide width and a waveguide length. That is, it is very difficult to ensure that a manufactured waveguide has a width precisely equal to a designed value in an actual processing process, thereby leading to reduced efficiency of optical mode coupling and conversion between waveguides of an actual component, and causing a low process tolerance. Moreover, a complex structure also increases process costs. These factors all limit an application scenario of this type of component. The polarization mode converter provided in the embodiments of the present invention may not only be used as a polarization rotary beam splitter, but also be used as a polarization rotary beam combiner. A coupling waveguide structure with a width changing gradually in an optical signal transmission direction is used for the polarization mode converter, so that section widths of waveguides in the optical signal transmission direction are different at different locations. In this way, coupling conditions of different wavelengths are met, and an operating bandwidth is extended. In addition, a waveguide width is a varying interval, not a fixed value. Even if a process error results in a waveguide width deviation, a coupling condition can still be met in a large range, so as to resolve problems of a low process tolerance, a complex structure, and a small operating bandwidth of a prior-art waveguide polarization converter, and to implement a component with a high process tolerance, a simple structure, and a large operating bandwidth.

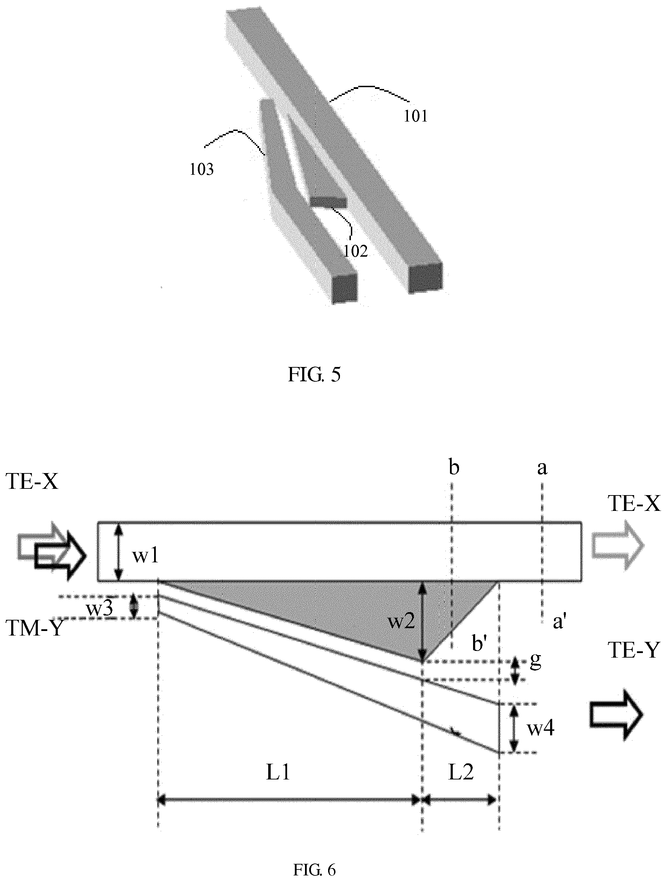

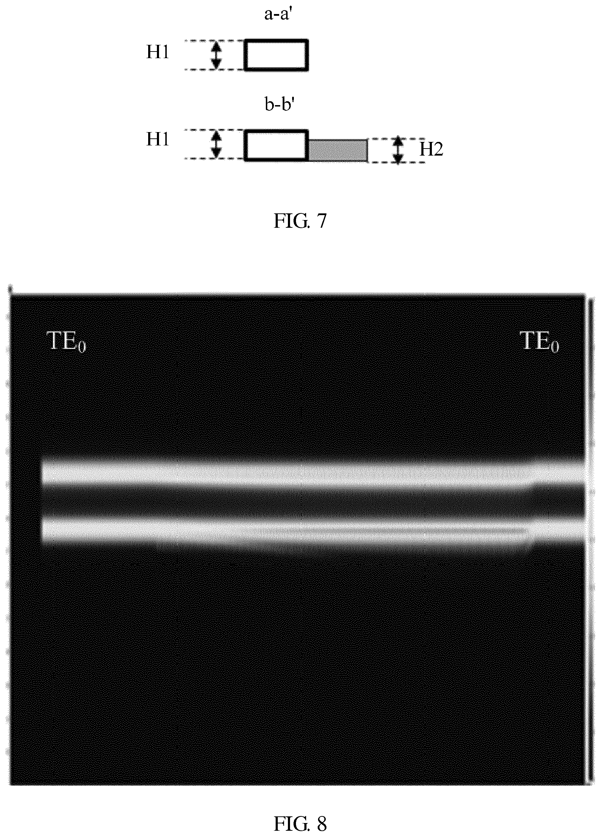

FIG. 5 is a solid figure of a polarization mode converter according to an embodiment of the present invention, and FIG. 1 is a top view of FIG. 5. To describe structure parameters of the polarization mode converter more clearly, FIG. 6 and FIG. 7 are used for description. FIG. 6 is a top view, and FIG. 7 is a side view of a-a' and b-b' in FIG. 6. Table 1 shows examples of structure parameter values according to an embodiment of the present invention.

**Table 1**

| Parameter | w1 | w2 | W3 | w4 | g | H1 | H2 | L1 | L2 |
|---|---|---|---|---|---|---|---|---|---|
| Typical value | 500 nm | 500 nm | 200 nm | 372 nm | 200 nm | 220 nm | 90 nm | 93 µm | 7 µm |

Analog simulation is performed on the structure parameter values shown in Table 1 to obtain the following simulation results.

FIG. 8 shows optical energy distribution of TE light with a wavelength of 1550 nm that is input from a left end of a rectangular waveguide. It can be learned that the TE light with the wavelength of 1550 nm directly passes through the rectangular waveguide, and there is almost no energy loss.

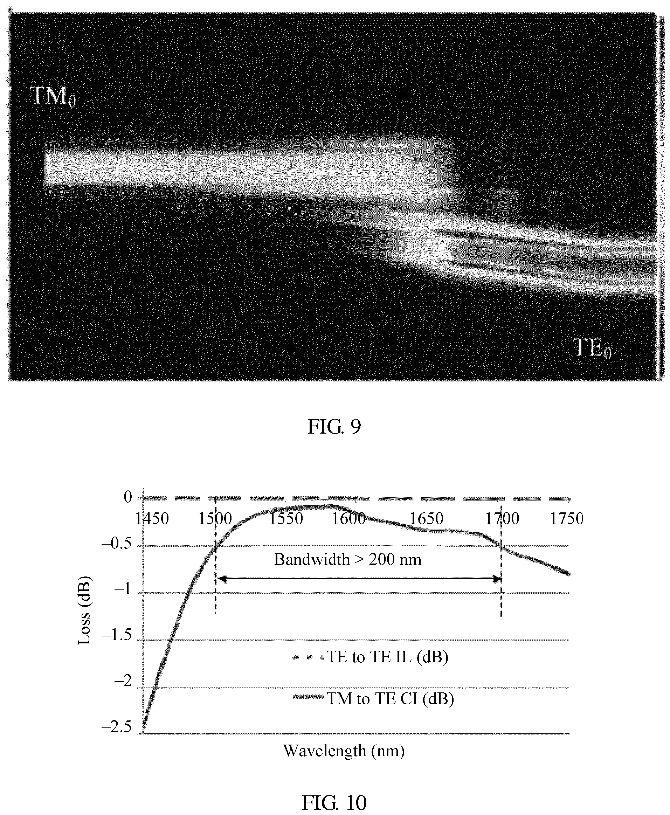

FIG. 9 shows optical energy distribution of TM light with a wavelength of 1550 nm that is input from a left end of a rectangular waveguide. It can be learned that the TM light with the wavelength of 1550 nm is coupled to a first tapered waveguide and a second tapered waveguide from the rectangular waveguide, and is output from a right end of the second tapered waveguide.

An insertion loss of TE light that is input from the left end of the rectangular waveguide and output from a right end of the rectangular waveguide is defined to be 10*lg (energy of the TE light that is output from the right end of the rectangular waveguide/energy of the TE light that is input from the left end of the rectangular waveguide). A conversion loss of the TM light that is input from the left end of the rectangular waveguide and output from the right end of the second tapered waveguide is defined to be 10*lg (energy of the TE light that is output from the right end of the second tapered waveguide/energy of the TM light that is input from the left end of the rectangular waveguide).

FIG. 10 shows an insertion loss IL resulting from TE light input in a band of 1450 nm to 1750 nm and a conversion loss CI resulting from TM light input in the band of 1450 nm to 1750 nm. It can be learned that, in the entire band, the insertion loss IL resulting from TE light input is less than 0.005 dB, the conversion loss CI resulting from TM light input is less than 0.5 dB, and a wavelength of a bandwidth at which a loss is less than 0.5 dB exceeds 200 nm.

A crosstalk of the TE light that is input from the left end of the rectangular waveguide and output from the right end of the second tapered waveguide is defined to be 10*lg (energy of the TE light that is output from the right end of the second tapered waveguide/energy of the TE light that is input from the left end of the rectangular waveguide). A conversion loss of the TM light that is input from the left end of the rectangular waveguide and output from the right end of the rectangular waveguide is defined to be 10*lg (energy of the TE light that is output from the right end of the rectangular waveguide/energy of the TM light that is input from the left end of the rectangular waveguide).

FIG. 10 shows a crosstalk XT_TE resulting from TE light input in a band of 1450 nm to 1750 nm and a crosstalk XT_TM resulting from TM light input in the band of 1450 nm to 1750 nm. It can be learned that, in the entire band, the crosstalk XT_TE resulting from TE light input is less than -35 dB, and the crosstalk XT_TM resulting from TM light input is less than -35 dB.

The foregoing descriptions are merely specific implementations of the present invention, but are not intended to limit the protection scope of the present invention. The present invention is only limited by the scope of the claims.

## Claims

1. A polarization mode converter comprising: a rectangular waveguide (101), wherein a height of the rectangular waveguide (101) is a first height, a first tapered waveguide (102), wherein a side of the first tapered waveguide (102) is connected to a side of the rectangular waveguide (101) in an optical signal propagation direction, a width of the first tapered waveguide (102) changes gradually in the optical signal propagation direction, a height of the first tapered waveguide (102) is a second height, and the second height is less than the first height; and a second tapered waveguide (103), wherein the second tapered waveguide (103) is unconnected to the rectangular waveguide (101), the second tapered waveguide (103) is unconnected to the first tapered waveguide (102) ), a width of the second tapered waveguide (103) changes gradually in the optical signal propagation direction, a height of the second tapered waveguide (103) is the first height, a distance between a first end of the second tapered waveguide (103) and the rectangular waveguide (101) is a first distance, a distance between a second end of the second tapered waveguide (103) and the rectangular waveguide (101) is a second distance, the second distance is greater than the first distance, and the first tapered waveguide (102) is located between the rectangular waveguide (101) and the second tapered waveguide (103); wherein the width extends in a direction between said rectangular waveguide and said second waveguide, wherein the first tapered waveguide (102) and the second tapered waveguide (103) are optically coupled.

2. The polarization mode converter according to claim 1, wherein the first tapered waveguide (102) is a triangular waveguide (101).

3. The polarization mode converter according to claim 2, wherein the second tapered waveguide (103) is a trapezoid waveguide, and a lateral side of the trapezoid waveguide is parallel to a side of the triangular waveguide (101).

4. The polarization mode converter according to claim 1, wherein a ratio of the second height to the first height is greater than 0.1.

5. The polarization mode converter according to claim 1, wherein a ratio of the second height to the first height is less than 0.9.

6. The polarization mode converter according to claim 3, wherein
a distance between the second tapered waveguide (103) and the first tapered waveguide (102) is less than 1 micrometer.

7. The polarization mode converter according to claim 1, further comprising:
an arc-shaped waveguide (104), wherein an end of the arc-shaped waveguide (104) is connected to the first end of the second tapered waveguide (103).

8. The polarization mode converter according to claim 1, wherein
a first end of the rectangular waveguide (101) is configured to receive a first TE signal, a second end of the rectangular waveguide (101) is configured to output the first TE signal.

9. The polarization mode converter according to claim 1 or 8, wherein
the first end of the rectangular waveguide (101) is configured to receive a second TM signal, wherein the second TM signal, when being transmitted in the rectangular waveguide (101), is gradually coupled into the first tapered waveguide (102) and then gradually coupled into the second tapered waveguide (103) to obtain a second TE signal; the second end of the second tapered waveguide (103) is configured to output the second TE signal.

10. The polarization mode converter according to claim 1, wherein
a second end of the rectangular waveguide (101) is configured to receive a third TE signal, a first end of the rectangular waveguide (101) is configured to output the third TE signal.

11. The polarization mode converter according to claim 1 or 10, wherein
the second end of the second tapered waveguide (103) is configured to input a fourth TE signal, wherein the fourth TE signal, when being transmitted in the second tapered waveguide (103), is gradually coupled into the first tapered waveguide (102) and then gradually coupled into the rectangular waveguide (101) to obtain a fourth TM signal; the first end of the rectangular waveguide (101) is configured to output the fourth TM signal.

## Patentansprüche

1. Polarisationsmodenwandler, umfassend:
einen rechteckigen Wellenleiter (101), wobei eine Höhe des rechteckigen Wellenleiters (101) eine erste Höhe ist,
einen ersten verjüngten Wellenleiter (102), wobei eine Seite des ersten verjüngten Wellenleiters (102) in einer optischen Signalausbreitungsrichtung mit einer Seite des rechteckigen Wellenleiters (101) verbunden ist, sich eine Breite des ersten verjüngten Wellenleiters (102) in der optischen Signalausbreitungsrichtung allmählich ändert,
eine Höhe des ersten verjüngten Wellenleiters (102) eine zweite Höhe ist und die zweite Höhe kleiner als die erste Höhe ist; und
einen zweiten verjüngten Wellenleiter (103), wobei der zweite verjüngte Wellenleiter (103) nicht mit dem rechteckigen Wellenleiter (101) verbunden ist, der zweite verjüngte Wellenleiter (103) nicht mit dem ersten verjüngten Wellenleiter (102) verbunden ist, sich eine Breite des zweiten verjüngten Wellenleiters (103) in der optischen Signalausbreitungsrichtung allmählich ändert, eine Höhe des zweiten verjüngten Wellenleiters (103) die erste Höhe ist, ein Abstand zwischen einem ersten Ende des zweiten verjüngten Wellenleiters (103) und dem rechteckigen Wellenleiter (101) ein erster Abstand ist, ein Abstand zwischen einem zweiten Ende des zweiten verjüngten Wellenleiters (103) und dem rechteckigen Wellenleiter (101) ein zweiter Abstand ist, der zweite Abstand größer als der erste Abstand ist und sich der erste verjüngte Wellenleiter (102) zwischen dem rechteckigen Wellenleiter (101) und dem zweiten verjüngten Wellenleiter (103) befindet;
wobei sich die Breite in einer Richtung zwischen dem rechteckigen Wellenleiter und dem zweiten Wellenleiter erstreckt,
wobei der erste verjüngte Wellenleiter (102) und der zweite verjüngte Wellenleiter (103) optisch gekoppelt sind.

2. Polarisationsmodenwandler nach Anspruch 1, wobei
der erste verjüngte Wellenleiter (102) ein dreieckiger Wellenleiter (101) ist.

3. Polarisationsmodenwandler nach Anspruch 2, wobei
der zweite verjüngte Wellenleiter (103) ein trapezförmiger Wellenleiter ist und eine laterale Seite des trapezförmigen Wellenleiters zu einer Seite des dreieckigen Wellenleiters (101) parallel ist.

4. Polarisationsmodenwandler nach Anspruch 1, wobei
ein Verhältnis der zweiten Höhe zur ersten Höhe größer als 0,1 ist.

5. Polarisationsmodenwandler nach Anspruch 1, wobei
ein Verhältnis der zweiten Höhe zur ersten Höhe kleiner als 0,9 ist.

6. Polarisationsmodenwandler nach Anspruch 3, wobei
ein Abstand zwischen dem zweiten verjüngten Wellenleiter (103) und dem ersten verjüngten Wellenleiter (102) kleiner als 1 Mikrometer ist.

7. Polarisationsmodenwandler nach Anspruch 1, ferner umfassend:
einen bogenförmigen Wellenleiter (104), wobei ein Ende des bogenförmigen Wellenleiters (104) mit dem ersten Ende des zweiten verjüngten Wellenleiters (103) verbunden ist.

8. Polarisationsmodenwandler nach Anspruch 1, wobei
ein erstes Ende des rechteckigen Wellenleiters (101) dafür ausgelegt ist, ein erstes TE-Signal zu empfangen und ein zweites Ende des rechteckigen Wellenleiters (101) dafür ausgelegt ist, das erste TE-Signal auszugeben.

9. Polarisationsmodenwandler nach Anspruch 1 oder 8, wobei
das erste Ende des rechteckigen Wellenleiters (101) dafür ausgelegt ist, ein zweites TM-Signal zu empfangen, wobei das zweite TM-Signal, wenn es in dem rechteckigen Wellenleiter (101) übertragen wird, allmählich in den ersten verjüngten Wellenleiter (102) eingekoppelt und dann allmählich in den zweiten verjüngten Wellenleiter (103) eingekoppelt wird, um ein zweites TE-Signal zu erhalten; und das zweite Ende des zweiten verjüngten Wellenleiters (103) dafür ausgelegt ist, das zweite TE-Signal auszugeben.

10. Polarisationsmodenwandler nach Anspruch 1, wobei
ein zweites Ende des rechteckigen Wellenleiters (101) dafür ausgelegt ist, ein drittes TE-Signal zu empfangen, und ein erstes Ende des rechteckigen Wellenleiters (101) dafür ausgelegt ist, das dritte TE-Signal auszugeben.

11. Polarisationsmodenwandler nach Anspruch 1 oder 10, wobei
das zweite Ende des zweiten verjüngten Wellenleiters (103) dafür ausgelegt ist, ein viertes TE-Signal einzugeben, wobei das vierte TE-Signal, wenn es in dem zweiten verjüngten Wellenleiter (103) übertragen wird, allmählich in den ersten verjüngten Wellenleiter (102) eingekoppelt wird und dann allmählich in den rechteckigen Wellenleiter (101) eingekoppelt wird, um ein viertes TM-Signal zu erhalten; und das erste Ende des rechteckigen Wellenleiters (101) dafür ausgelegt ist, das vierte TM-Signal auszugeben.

## Revendications

1. Convertisseur de mode de polarisation, comprenant :
un guide d'ondes rectangulaire (101), une hauteur du guide d'ondes rectangulaire (101) étant une première hauteur ;
un premier guide d'ondes conique (102), un côté du premier guide d'ondes conique (102) étant connecté à un côté du guide d'ondes rectangulaire (101) dans une direction de propagation de signal optique, une largeur du premier guide d'ondes conique (102) changeant progressivement dans la direction de propagation de signal optique, une hauteur du premier guide d'ondes conique (102) étant une seconde hauteur et la seconde hauteur étant inférieure à la première hauteur ; et
un second guide d'ondes conique (103), le second guide d'ondes conique (103) n'étant pas connecté au guide d'ondes rectangulaire (101), le second guide d'ondes conique (103) n'étant pas connecté au premier guide d'ondes conique (102), une largeur du second guide d'ondes conique (103) changeant progressivement dans la direction de propagation de signal optique, une hauteur du second guide d'ondes conique (103) étant la première hauteur, une distance entre une première extrémité du second guide d'ondes conique (103) et le guide d'ondes rectangulaire (101) étant une première distance, une distance entre une seconde extrémité du second guide d'ondes conique (103) et le guide d'ondes rectangulaire (101) étant une seconde distance, la seconde distance étant supérieure à la première distance et le premier guide d'ondes conique (102) étant situé entre le guide d'ondes rectangulaire (101) et le second guide d'ondes conique (103);
la largeur s'étendant dans une direction entre ledit guide d'ondes rectangulaire et ledit second guide d'ondes,
le premier guide d'ondes conique (102) et le second guide d'ondes conique (103) étant couplés optiquement.

2. Convertisseur de mode de polarisation selon la revendication 1, dans lequel :
le premier guide d'ondes conique (102) est un guide d'ondes triangulaire (101).

3. Convertisseur de mode de polarisation selon la revendication 2, dans lequel :
le second guide d'ondes conique (103) est un guide d'ondes trapézoïdal et un côté latéral du guide d'ondes trapézoïdal est parallèle à un côté du guide d'ondes triangulaire (101).

4. Convertisseur de mode de polarisation selon la revendication 1, dans lequel :
un rapport entre la seconde hauteur et la première hauteur est supérieur à 0,1.

5. Convertisseur de mode de polarisation selon la revendication 1, dans lequel :
un rapport entre la seconde hauteur et la première hauteur est inférieur à 0,9.

6. Convertisseur de mode de polarisation selon la revendication 3, dans lequel :
une distance entre le second guide d'ondes conique (103) et le premier guide d'ondes conique (102) est inférieure à 1 micromètre.

7. Convertisseur de mode de polarisation selon la revendication 1, comprenant en outre :
un guide d'ondes en forme d'arc (104), une extrémité du guide d'ondes en forme d'arc (104) étant connectée à la première extrémité du second guide d'ondes conique (103).

8. Convertisseur de mode de polarisation selon la revendication 1, dans lequel :
une première extrémité du guide d'ondes rectangulaire (101) est configurée pour recevoir un premier signal TE et une seconde extrémité du guide d'ondes rectangulaire (101) est configurée pour délivrer le premier signal TE.

9. Convertisseur de mode de polarisation selon la revendication 1 ou 8, dans lequel :
la première extrémité du guide d'ondes rectangulaire (101) est configurée pour recevoir un second signal TM, le second signal TM, quand il est transmis dans le guide d'ondes rectangulaire (101), étant progressivement couplé dans le premier guide d'ondes conique (102) puis progressivement couplé dans le second guide d'ondes conique (103) afin d'obtenir un deuxième signal TE ; la seconde extrémité du second guide d'ondes conique (103) est configurée pour délivrer le deuxième signal TE.

10. Convertisseur de mode de polarisation selon la revendication 1, dans lequel :
une seconde extrémité du guide d'ondes rectangulaire (101) est configurée pour recevoir un troisième signal TE et une première extrémité du guide d'ondes rectangulaire (101) est configurée pour délivrer le troisième signal TE.

11. Convertisseur de mode de polarisation selon la revendication 1 ou 10, dans lequel :
la seconde extrémité du second guide d'ondes conique (103) est configurée pour entrer un quatrième signal TE, le quatrième signal TE, quand il est transmis dans le second guide d'ondes conique (103), étant progressivement couplé dans le premier guide d'ondes conique (102) puis progressivement couplé dans le guide d'ondes rectangulaire (101) afin d'obtenir un quatrième signal TM ; la première extrémité du guide d'ondes rectangulaire (101) est configurée pour délivrer le quatrième signal TM.
